# EUROPEAN PATENT SPECIFICATION

(11) **EP 0 481 700 B1**
(45) Date of publication and mention of the grant of the patent: **27.12.1995**
(21) Application number: 91309419.9
(22) Date of filing: 14.10.1991
(51) Int. Cl.: G02F 1/137

(54) **Liquid crystal display**
Flüssigkristallanzeige
Afficheur à cristal liquide

(30) Priority: 15.10.1990 JP 273509/90
(43) Date of publication of application: 22.04.1992
(73) Proprietor: International Business Machines Corporation, Armonk, N.Y. 10504 (US)
(72) Inventor: Takano, Hideo, Kanagawa-ken (JP)
(74) Representative: Burt, Roger James, Dr.

(56) References cited:
- CH-A- 597 608
- US-A- 4 084 884
- PHILIPS JOURNAL OF RESEARCH vol. 34, no. 12, September 1979, EINDHOVEN, NEDERLAND pages 78 - 86 M. GOSCIANSKI
- IBM TECHNICAL DISCLOSURE BULLETIN vol. 33, no. 1B, June 1990, ARMONK, USA pages 199-200, XP122861
- IEEE TRANSACTIONS ON ELECTRON DEVICES vol. ED-24, no. 7, July 1977, NEW YORK, USA pages 811 - 815 A. MIYAJI ET AL.
- PATENT ABSTRACTS OF JAPAN vol. 9, no. 72 (P-345)(1795) 2 April 1985 & JP-A-59 204 823

## Description

The invention relates to a liquid crystal display having a liquid crystal panel, the panel comprising a first and a second substrate spaced apart with a nematic liquid crystal layer therebetween, each of said substrates having a respective electrode and orientation layer thereon, the electrodes being arranged so as to form a plurality of pixels arranged in a matrix, the arrangement of the orientation layers and substrates being such as to provide a twisted alignment to said nematic liquid crystal layer.

Such a display is disclosed in Philips Journal of Research; Vol 34, no.12, September 1979, pages 78-86, M Goscianski.

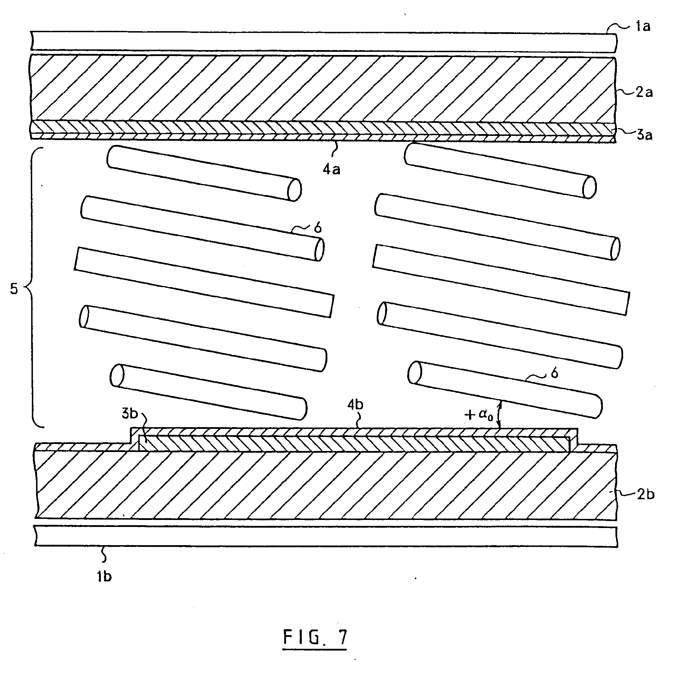

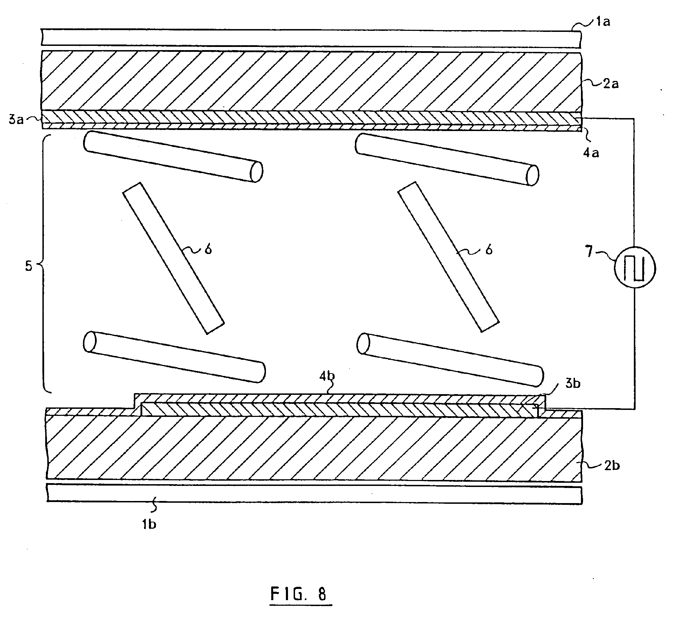

A liquid crystal display element in twisted nematic mode (TN mode), of various liquid crystal display elements, has the significant features of low voltage, low consumption of power, a long life, etc., and in recent years, has been used most widely. A TN-mode cell has anisotropic nematic liquid crystal thin films of a positive dielectric constant interposed between two glass substrates on which transparent electrodes are deposited, a longitudinal axis of molecules of the liquid crystal being substantially parallel to the planes of the glass substrates, the upper and the lower glass substrates being arranged at a twisted angle of almost 90°. FIG.7 shows an outline of the construction of a conventional TN liquid crystal cell when voltage is not applied to the cell, and FIG.8 shows an outline of the construction of the liquid crystal cell shown in FIG.7 when an AC voltage is applied to the cell. In the figures, on the outsides of an upper glass substrate 2a and a lower glass substrate 2b, two polarization plates la and lb are arranged so that their transmission or absorption axes align with the direction of arrangement of molecules of the liquid crystal on the side of incidence. On the insides of the upper glass substrate 2a and the lower glass substrate 2b, transparent electrodes 3a and 3b formed by a transparent conductive film, for example, an indium tin oxide (ITO) film doped with tin oxide, are deposited. Further, orientation films 4a and 4b are applied to the electrodes. Between the two glass substrates on which the transparent electrodes 3a and 3b are deposited, a nematic liquid crystal layer 5 is interposed. In the liquid crystal layer 5, molecules 6 of the liquid crystal are shown as a model. FIG.7 shows a state where the orientation film 4a on the glass substrate 2a is rubbed in one direction to align longitudinal axes of the molecules 6 of the liquid crystal and to tilt the molecules 6 of the liquid crystal at an angle, that, is, pre-tilt angle α₀, showing the small rising of the molecules from the plane of the substrate when the voltage is not applied. If the AC voltage 7 is applied to the liquid crystal panel shown in FIG.7, each molecule 6 of the liquid crystal in the middle of the cross section of the cell, as shown in FIG.8, rises in one direction.

For example, if the polarization axes of the polarizing plates 1a and 1b are parallel to each other, when the voltage is not applied as in FIG.7 incident light is linearly polarized at the polarizing plate 1b, and changes the direction of its polarization by 90 degrees along the twist of the molecules of the liquid crystal in the liquid crystal layer 5, to be parallel to an absorption axis of the polarizing plate 1a from which the light goes out giving rise to a dark state. On the other hand, when the voltage is applied as shown in FIG.8, incident light which has been linearly polarized at the polarizing plate 1b reaches the polarizing plate 1a on the outgoing side keeping its direction of polarization and most of the incident light passes through the polarizing plate 1a giving rise to a bright state. Also, if the polarization axes of the polarizing plates 1a and 1b, parallel to each other, are changed to be orthogonal to each other, the dark or the bright state for said liquid crystal cell is reversed.

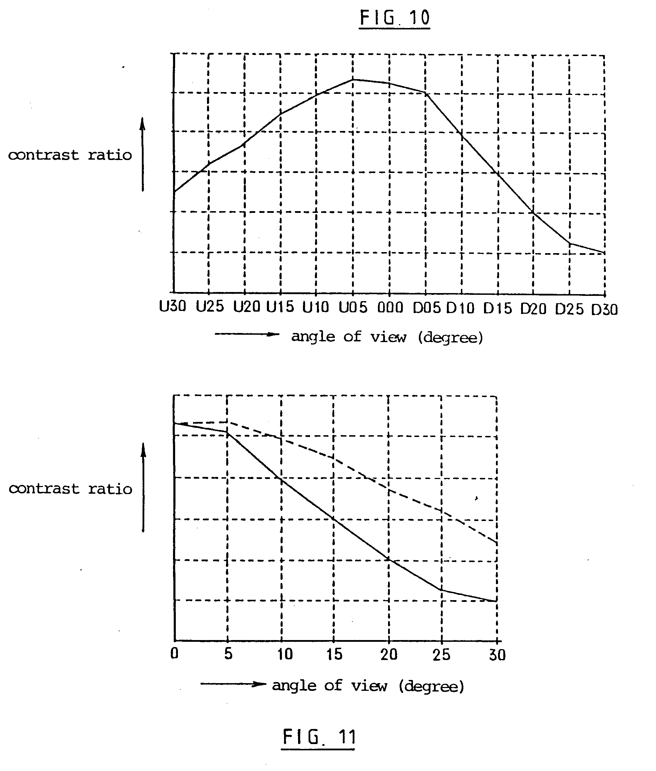

Now if the AC power source 7, as is shown in FIG.8, is set to 5V and the angle of view of the glass substrates 2a and 2b observed from the upper and lower sides is changed thereby measuring a contrast ratio between dark and light states of the liquid cell, then graphs such as those shown in FIG.10 and FIG.11 are obtained. In FIG.10, U30 or D30 indicates an angle of 30° from the upper or the lower side, respectively. In FIG.11, a solid line and a dashed line indicate the results of measurement from the lower and upper side, respectively.

However, in a conventional TNT-LCD as described above, the best angle of view cannot be set to be normal to the plane of a glass substrate. If the direction of the best angle of view from the glass substrate is defined as upward, the angles of view are symmetric in the horizontal direction; on the other hand, the angles of view are, as shown in FIG.10 and FIG.11, unsymmetric in the vertical direction. To solve this problem, a method of covering the panel with a Fresnel lens has been contrived. However, this method has the disadvantage that the presence of stripes is disagreeable and the cost of the panel is increased. Another solution to the problem involves forming micro irregularities on the surface and of one side to enlarge the angle of view. However, this method has the disadvantage that graininess to the eyes is unavoidable and cost of forming the micro irregularities is added to the cost of the display.

The invention is intended to solve such problems, and in particular to provide a TN-LCD with the capability of a desirable gradation display, with the best angle of view normal to the glass substrate, and the characteristic that angles of view are symmetric in the vertical direction of the substrates.

A liquid crystal layer which has molecules with a first tilt angle at a first substrate and a second tilt angle at a second substrate, the second tilt angle being of opposite sense to the first tilt angle, whereby the tilt angle changes continuously from the first tilt angle to the second tilt angle between the first substrate and the second substrate is disclosed by US-A-4,084,884.

According to this invention a liquid crystal display of the above type is characterised by the arrangement of said orientation layers being such as to provide a first pre-tilt angle at said first substrate and a second pre-tilt angle at said second substrate, the second pre-tilt angle being of opposite sense to the first pre-tilt angle, whereby the pre-tilt angle changes continuously from the first pre-tilt angle to the second pre-tilt angle between the first substrate and the second substrate, thereby providing that each pixel exhibits a single tilt domain when no voltage is applied across the pixel and first and second tilt domains when a voltage is applied across the pixel.

In a preferred form of the invention, the first and second pre-tilt angles are of equal magnitude, the pre-tilt angle in the middle of the liquid crystal layer being zero, whereby the size of the first domain is equal to that of the second domain.

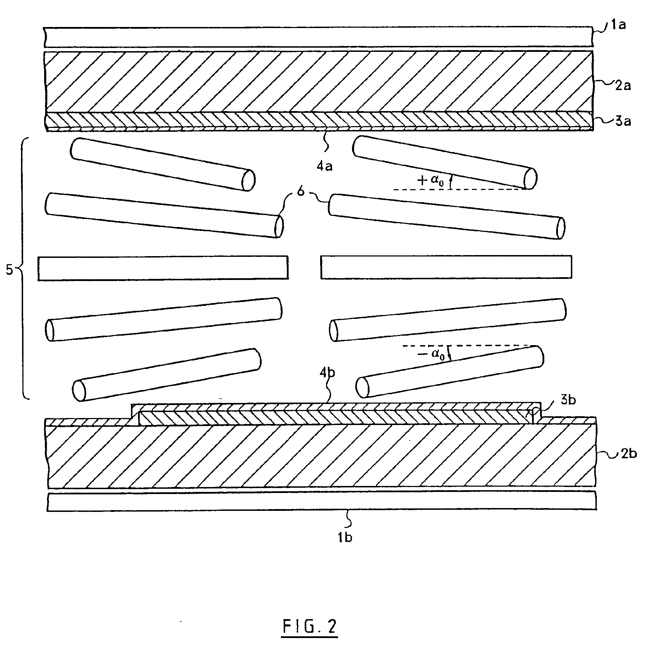

To form the first and second domains, molecules of a liquid crystal in the middle of a cross section of a cell are oriented when a voltage is not applied, at a pre-tilt angle of zero, parallel to the supper and a lower glass substrates. In addition, when the voltage is not applied, the molecules of liquid crystal are twisted in a direction, as shown in the FIG.2 of the present invention, which opposes a twist direction shown in the FIG.7 in which a pre-tilt of molecules of liquid crystal on the orientation films of the upper and the lower substrates is aligned parallel to each other and is stabilized in this state.

Such twist direction of the present invention shown in the FIG.2 is realised (a) by adding chiral dopants into the liquid crystal which gives the twist direction of the FIG.2 along with the rubbing direction of 90 degrees on the upper and lower substrates, (b) by a bias rubbing in which an angle between the rubbing directions on the upper and lower substrates is smaller than 90 degrees, and (c) by adding the chiral dopants into he liquid crystal which gives the twist direction of the FIG.2 along with the rubbing direction on the upper and lower substrates and by the bias rubbing in which an angle between the rubbing directions on the upper and lower substrates is smaller than 90 degrees.

An embodiment of the invention will now be described, by way of example only, with reference to the accompanying drawing, wherein:
FIG.1 is a schematic diagram of an embodiment of the invention showing a liquid crystal cell in a case of application of a voltage to a liquid crystal panel;
FIG.2 is a schematic diagram of an embodiment of the invention showing a liquid crystal cell to which the voltage has not been applied;
FIG.3 is a diagram showing rubbing directions in the embodiment of the invention;
FIG.4 is an illustration showing the directions of the electric lines of force in an electric field in FIG.1;
FIG.5 and FIG.6 are graphs showing the dependence of contrast ratios on angles of view from the upper and lower sides in the embodiment of FIG.1;
FIG.7 is a schematic diagram showing a conventional liquid crystal cell when a voltage is not applied to a conventional liquid crystal panel;
FIG.8 is a schematic diagram showing a conventional liquid crystal cell when the voltage is applied to the conventional liquid crystal panel;
FIG.9 is an illustration of rubbing directions in the prior art;
FIG.10 and FIG.11 are graphs showing dependence of contrast ratios on angles of view from the upper and lower sides in the prior art.

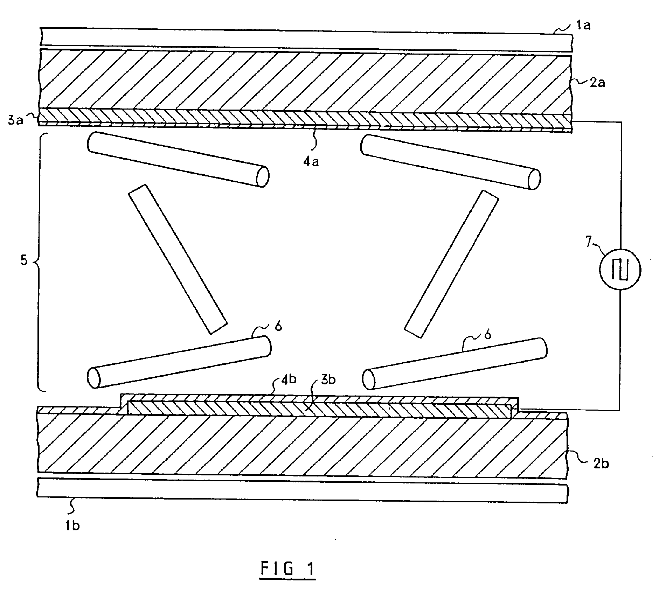

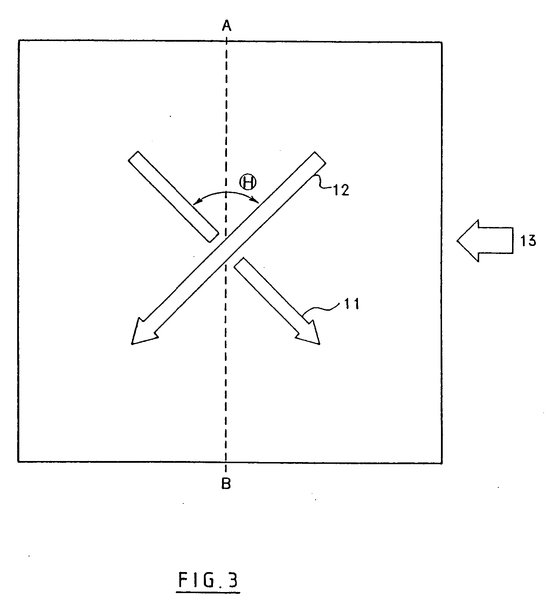

Prior to description of the embodiment, shown in FIG.1 and FIG.2 of the invention, the directions of rubbing in a liquid crystal cell of the invention are described in FIG. 3. FIG.3 is an illustration viewed from an upper glass substrate 2a. In FIG.3, arrows 11 and 12 indicate a rubbing direction for a lower glass substrate 2b and the upper glass substrate 2a, respectively. A pre-tilt state caused by rubbing in the directions shown in the figure stabilizes right-twisted orientation by which the best angle of view can be obtained in the direction of the arrow 13. This means that if a liquid crystal to which no chiral dopant is added is used and the angle H shown is FIG.3 is set to 90°, a right-twisted orientation by which the best angle of view can be obtained in the direction of the arrow 13 is accomplished. However, if a chiral dopant enough for left-twisted orientation is added or the above-described angle H is decreased to much less than 90°, or a chiral dopant enough for left-twisted orientation is added and the angle H is decreased to much less than 90°, the orientation of molecules of the liquid crystal is as shown in FIG.2. FIG.2 is a schematic illustration of a cross section taken along A-B in FIG.3. FIG.1 is a schematic illustration of a cross section taken along A-B when the voltage is applied. The cases (a) and (b) described hereinbefore are described in more detail.

Viewing from the upper substrates, the head of the arrow 12 rotates in a counter clockwise direction to the head of the arrow 11. That is, the rubbing directions viewing from the upper substrate rotates in the counter clockwise direction.

The chiral dopants used in the case (a) rotate the molecules of the liquid crystal in the counter clockwise direction, viewing from the upper substrate, which is the same rotation direction as the above described rotation of the rubbing direction, whereby the arrangement of the molecules of liquid crystal shown in the FIG.2 is realised.

In the case (b), an angle H, e.g. 80 degrees, smaller than 90 degrees shown in the FIG.3 is used. In this condition, the molecules of liquid crystal are completely rotated in the counter clockwise direction viewing from the upper substrate, without any chiral dopants. The rotated direction of the molecules of liquid crystal is also the same as the rotation direction of the arrow 12 to the arrow 11, so that the arrangement of the molecules of liquid crystal shown in the FIG.2 is realised.

In the case (c), an angle H, e.g. 85 degrees, between 90 degrees and 80 degrees is used. At the 85 degrees, the molecules of liquid crystal do not start the rotation in the counter clockwise direction by themselves, therefore, chiral dopants are required which assist the rotation of the molecules of liquid crystal in the counter clockwise direction, so that the arrangement of the molecules of liquid crystal shown in the FIG.2 is obtained.

The arrangement of the molecules of liquid crystal shown in the FIG.2 is obtained by the rotation direction of the molecules of liquid crystal which is the same direction of the rotation of the rubbing direction from the upper substrate to the lower substrate.

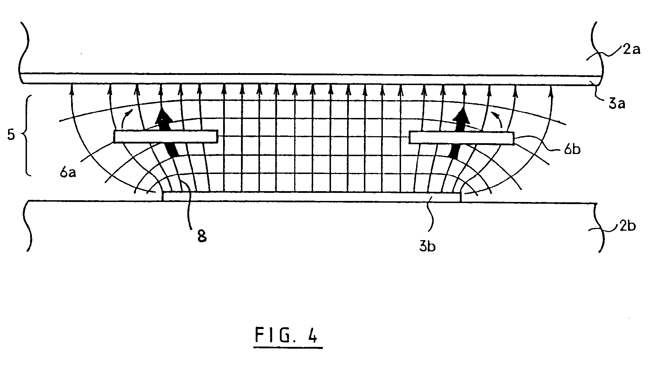

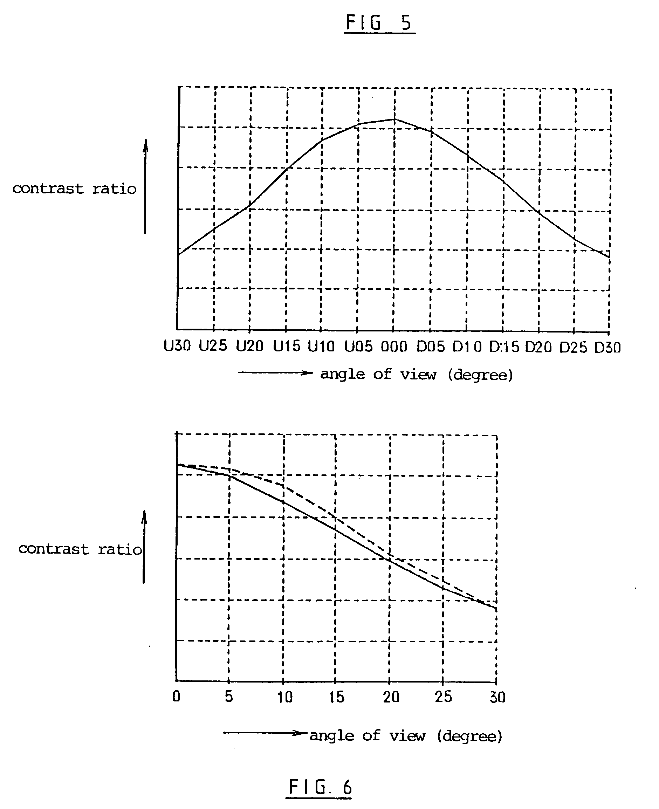

The arrangement of the molecules of liquid crystal, when the voltage is applied, shown in the FIG.1 is performed by the combination of (1) the arrangement of the molecules of liquid crystal shown in the FIG.2, and (2) inclined electric field which is generated by the lower electrode 3b smaller in size than the upper electrode 3a. Referring to the FIG.4, the molecules 6a incline along the inclined electric field and the molecule 6b inclines along the inclined electric field, so that the final arrangement shown in the FIG.1 is obtained. In this manner, the leftside and rightside molecules in one picture element are symmetrically inclined when the voltage is applied, so that a uniform contrast as shown in the FIG.5 and 6 is obtained regardless of the viewing angle.

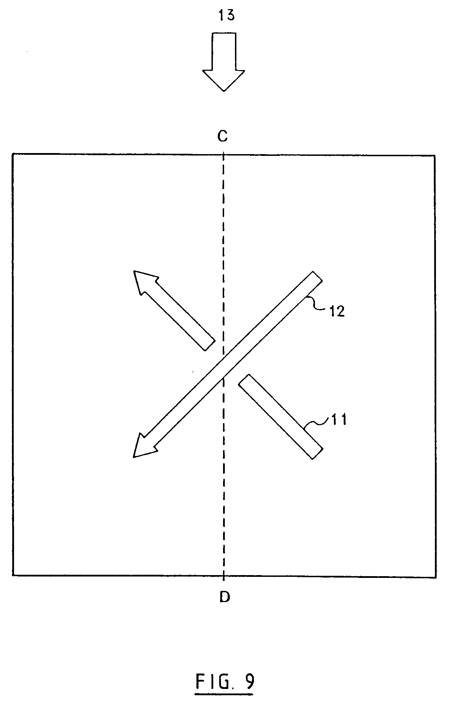

For reference, a direction of rubbing in the prior art is shown in FIG.9. A pre-tilt state caused by rubbing shown in FIG.9 allows left-twisted orientation, by which the best angle of view is obtained in the direction of an arrow 13 in FIG.9, to be stabilized. FIG.7 and FIG.8 are schematic illustrations of a cross section taken along C-D in FIG.9. Embodiments shown in FIG.1 and FIG.2 differ from the prior art in the orientation of molecules of the liquid crystal in the liquid crystal cell. According to the invention, a domain of each pixel is divided into two domains having respectively positive and negative tilt of molecules of the liquid crystal. In the embodiment the size of the positive tilt domain is equal to that of the negative tilt domain in order that the best angle of view be normal to the plane of the substrate and that a visual field be symmetric in the horizontal direction as well as in the vertical direction on the plane of the substrate. In the following, the optical characteristic is described in accordance with a principle of the invention.

If a voltage is applied to molecules of an anisotropic liquid crystal material having a positive dielectric constant, each molecule of the liquid crystal is tilted so that its longitudinal axis becomes parallel to the direction of am electric field. Now, as shown in FIG.7 of the prior art, if the molecules of the liquid crystal are orientated uniformly in a pre-tilt state everywhere between the upper and the lower substrates, then application of a voltage between the upper and the lower transparent electrodes causes the molecules of the liquid crystal in the middle of the cross section of the cell to be tilted uniformly in a direction determined by the pre-tilt state. In the example of FIG.7, since the molecules of the liquid crystal is in a pre-tilt state clockwise, each molecule is also tilted clockwise when the voltage is applied, as shown in FIG.1. However, the directions of molecules adjacent to the upper and the lower substrates are not changed even though the voltage is applied due to interaction between the orientation films and the molecules of the liquid crystals . Thus the average tilt of the molecules of the liquid crystal in the entire cell is in a fixed direction, depending upon application of the voltage. A direction in which the molecules of the liquid crystals that is most certainly standing on average, in the entire cell are visible leads to the direction of the optimum angle of view. Referring to FIG.8, in the conventional construction, the direction in which the optimum angle of view can be obtained, as is obvious from the figure, is not normal to the plane of the substrate, but is a direction tilted counterclockwise to the normal direction. On the other hand, referring to FIG.2, since twist is opposite, in direction, to twist for stabilizing the pre-tilt state, the molecules of the liquid crystal extend to some degree and deform. The pre-tilt angle is not uniform in the entire cell, and changes continuously within the range from -α₀ to +α₀ along the direction of a thickness of the cell. In the middle of the cross section of the cell, the pre-tilt angle is zero and the molecules of the liquid crystal are parallel to the upper or the lower substrate. In this state, when the electric field is applied vertically to the substrates, it is not possible to uniquely determine whether the molecules of the liquid crystals are tilted clockwise or counterclockwise. Further, since in the upper part and the lower part of the cross section of the cell, pre-tilt directions are opposite to each other, orientation for tilt cannot be defined. However, if the electric field is not applied vertically to the glass substrates locally, the problem for instability of tilt direction of the molecules of the liquid crystals can be solved and direction of local tilt can be uniquely determined.

One of reasons why an electric field does not become vertical locally to the glass base plates is distortion in the electric field at the ends of the electrodes, which appears when the upper and the lower transparent electrodes are different, in shape, from each other.

For a usual TFT-LCD, a transparent electrode on the side of a TFT substrate is smaller in size than a transparent electrode on the side of the opposite substrate; for a simple matrix LCD or two terminal-type active matrix LCD (MIM, etc.), the size of a horizontal electrode is smaller than that of a vertical electrode in a cross section taken along C-D in FIG.9.

FIG.4 shows the direction 8 of an electric field in a case where the upper and the lower transparent electrodes are different, in shape, from each other. In the figure, the same symbols are used as in FIG.1 and FIG.2. To simplify the figure, orientation films are omitted. In the middle of the cell, molecules of the liquid crystal 6a and 6b unpretilted are shown. In such cross section as shown in the figure, the lower transparent electrode 3b being smaller in size than the upper transparent electrode 3a, the electric field is inclined against the substrate at the ends of the lower transparent electrode. Therefore, the molecules 6a and 6b of the liquid crystal tilt clockwise and counterclockwise, respectively. Molecules of the liquid crystal between the molecules 6a and 6b tilt according to a distance from either the molecules 6a or 6b, that is, in the same direction as in tilt of either molecules 6a or 6b closer to the molecules. Thus, as shown in the embodiment of FIG.1, two tilt domains which are almost the same in size and opposite to each other in direction of tilt are obtained for each pixel.

In the example of a conventional liquid crystal panel shown in FIG.8 different optical effects are observed, as shown in FIG.10 and FIG.11, since tilt of molecules of the liquid crystal observed at an angle counterclockwise from the normal line to the plane of the substrate is seen differently from their tilt observed at an angle clockwise from the normal line to the plane of the substrate.

On the other hand, according to the present invention shown in FIG.1, a symmetrical optical effect can be obtained at angles from the upper and lower sides since tilt of molecules of the liquid crystal observed at an angle counterclockwise from the normal line to the plane of the substrate and their tilt observed at an angle clockwise from the normal line to the plane of the tilt are seen almost alike. This is shown in FIGS.5 and 6. In FIG.5, U30 or D30 indicates a viewing angle of 30 degrees from the upper or lower sides. FIG.5 indicates that substantially the same contrast was performed at the upper and lower angles, e.g. at U30 and D30, in accordance with the present invention. In FIG.6, a dashed line indicates the contrast measured between 0 degrees and 30 degrees at the upper side, and a solid line indicates the contrast measured between 0 degrees and 30 degrees at the lower side.

## Claims

1. A liquid crystal display having a liquid crystal panel, the panel comprising a first and a second substrate (2a, 2b) spaced apart with a nematic liquid crystal layer (5) therebetween, each of said substrates having a respective electrode (3a, 3b) and orientation layer (4a, 4b) thereon, the electrodes being arranged so as to form a plurality of pixels arranged in a matrix, the arrangement of the orientation layers (4a, 4b) and substrates (2a, 2b) being such as to provide a twisted alignment to said nematic liquid crystal layer (5), characterised by the arrangement of said orientation layers (4a, 4b) being such as to provide a first pre-tilt angle (α₀) at said first substrate (2a) and a second pre-tilt angle (-α₀) at said second substrate, the second pre-tilt angle being of opposite sense to the first pre-tilt angle, whereby the pre-tilt angle changes continuously from the first pre-tilt angle to the second pre-tilt angle between the first substrate and the second substrate, thereby providing that each pixel exhibits a single tilt domain when no voltage is applied across the pixel and first and second tilt domains when a voltage is applied across the pixel.

2. A liquid crystal display as claimed in claim 1, wherein the first and second pre-tilt angles are of equal magnitude, the pre-tilt angle in the middle of the liquid crystal layer being zero, whereby the size of the first domain is equal to that of the second domain.

3. A liquid crystal display as claimed in claim 1 or claim 2 wherein a chiral dopant is added to said nematic liquid crystal.

4. A liquid crystal display as claimed in any preceding claim, wherein said orientation layer is formed by bias-rubbing.

## Patentansprüche

1. Eine Flüssigkristallanzeige mit einer Flüssigkristallanzeigefläche, wobei die Anzeigefläche ein erstes und ein zweites Substrat (2a, 2b) enthält, die durch eine zwischen ihnen befindliche, nematische Flüssigkristallschicht (5) voneinander getrennt sind, und jedes Substrat eine zugehörige Elektrode (3a, 3b) sowie eine darauf befindliche Ausrichtungsschicht (4a, 4b) aufweist, wobei die Elektroden so angeordnet sind, daß eine Vielzahl von in einer Matrix angeordneten Bildpunkten gebildet wird, und die Anordnung der Ausrichtungsschichten (4a, 4b) und Substrate (2a, 2b) dergestalt ist, daß sie eine verdrehte Ausrichtung in der nematischen Flüssigkristallschicht (5) gestatten, gekennzeichnet durch die Anordnung von Ausrichtungsschichten (4a, 4b) in einer Weise, daß ein erster Vorneigungswinkel (α₀) auf dem ersten Substrat (2a) und ein zweiter Vorneigungswinkel (-α₀) auf dem zweiten Substrat gebildet wird, wobei der zweite Vorneigungswinkel eine dem ersten Vorneigungswinkel entgegengesetzte Richtung aufweist, wodurch sich der Vorneigungswinkel laufend vom ersten Vorneigungswinkel zum zweiten Vorneigungswinkel zwischen dem ersten Substrat und dem zweiten Substrat ändert und dafür sorgt, daß jeder Bildpunkt eine einzelne Neigungsdomäne aufweist, wenn keine Spannung am Bildpunkt anliegt, bzw. ein erste und eine zweite Neigungsdomäne aufweist, wenn eine Spannung am Bildpunkt anliegt.

2. Eine Flüssigkristallanzeige wie in Patentanspruch 1 niedergelegt, in der die ersten und zweiten Vorneigungswinkel die gleiche Größe haben, der Vorneigungswinkel in der Mitte der Flüssigkristallschicht Null ist, wodurch die Größe der ersten Domäne der Größe der zweiten Domäne entspricht.

3. Eine Flüssigkristallanzeige wie in Patentanspruch 1 oder 2 niedergelegt, in der dem nematischen Flüssigkristall ein spiralförmiger Dotierstoff hinzugefügt wird.

4. Eine Flüssigkristallanzeige wie in einem beliebigen der vorstehenden Patentansprüche niedergelegt, in der die Ausrichtungsschicht durch Vorspannungsreibung gebildet wird.

## Revendications

1. Afficheur à cristaux liquides comprenant un panneau de cristaux liquides, ledit panneau comprenant un premier et un deuxième substrat (2a, 2b) écartés entre lesquels une couche de cristaux liquides nématiques (5) est disposée, chacun de dits substrats étant recouvert d'une couche d'électrode (3a, 3b) et d'une couche d'orientation (4a, 4b) respective, les électrodes étant disposées de manière à former une pluralité de pixels disposés en matrice, la disposition des couches d'orientation (4a, 4b) et des substrats (2a, 2b) étant telles que les dits cristaux liquides nématiques de ladite couche (5) sont mis en hélice, ledit afficheur étant caractérisé en ce que la disposition des dites couches d'orientation (4a, 4b) induit un premier angle de pré-inclinaison (alpha₀) sur ledit premier substrat (2a) et un deuxième angle de pré-inclinaison (-alpha₀) sur ledit deuxième substrat, le deuxième angle de pré-inclinaison étant de sens opposé par rapport au premier angle de pré-inclinaison; et en ce que l'angle de pré-inclinaison passe continuellement du premier angle de pré-inclinaison au deuxième angle de pré-inclinaison entre le premier et le deuxième substrat, de façon à ce que chaque pixel montre un seul domaine d'inclinaison lorsque aucune tension n'est appliquée aux bornes du pixel, et un premier et un deuxième domaines d'inclinaison lorsqu'une tension est appliquée aux bornes du pixel.

2. Afficheur à cristaux liquides selon la revendication 1, dans lequel le premier et le deuxième angle de pré-inclinaison sont de même grandeur, l'angle de pré-inclinaison au milieu de la couche de cristaux liquides étant égal à zéro, la taille du premier domaine étant ainsi égale à celle du deuxième domaine.

3. Afficheur à cristaux liquides selon la revendication 1 ou 2, dans lequel des impuretés chirales sont ajoutées aux dits cristaux liquides nématiques.

4. Afficheur à cristaux liquides selon l'une quelconque des revendications précédentes, dans lequel ladite couche d'orientation est formée par frottement de polarisation.
